# EUROPÄISCHE PATENTSCHRIFT

(11) **EP 4 159 407 B1**
(45) Veröffentlichungstag und Bekanntmachung des Hinweises auf die Patenterteilung: **15.05.2024**
(21) Anmeldenummer: 22195500.8
(22) Anmeldetag: 14.09.2022
(51) Int. Cl.: B29C 48/793, B29B 13/08, B29C 48/00, B29C 48/285, B29C 48/92, B29B 7/74, B29B 7/82, B29B 13/02, B29K 21/00

(54) **VERFAHREN UND VORRICHTUNG ZUM VERARBEITEN VON KAUTSCHUKMISCHUNGEN BEI DER HERSTELLUNG VON FAHRZEUGREIFEN**
METHOD AND APPARATUS FOR PROCESSING RUBBER MIXTURES IN THE PRODUCTION OF VEHICLE TYRES
PROCÉDÉ ET DISPOSITIF DE TRAITEMENT DE MÉLANGES DE CAOUTCHOUC LORS DE LA FABRICATION DE PNEUS DE VÉHICULE

(30) Priorität: 01.10.2021 DE 102021211065
(43) Veröffentlichungstag der Anmeldung: 05.04.2023
(73) Patentinhaber: Continental Reifen Deutschland GmbH, 30175 Hannover (DE)
(72) Erfinder: Wagner, Andre, 30165 Hannover (DE); Pfaff, Florian, 30165 Hannover (DE); Diekmann, Matthias, 30165 Hannover (DE); Sharifi, Monir, 30165 Hannover (DE)
(74) Vertreter: Continental Corporation

(56) Entgegenhaltungen:
- WO-A1-2016/092404
- CN-A- 112 976 535
- DE-A1-102006 016 498
- JP-A- S52 125 569
- JP-U- S5 192 564

## Beschreibung

Die Erfindung betrifft ein Verfahren zum Verarbeiten von Kautschukmischungen, ein Verfahren zur Herstellung eines vulkanisierten Kautschukprodukts umfassend die Schritte des Verfahrens und eine Vorrichtung für die Durchführung des Verfahrens sowie die Verwendung von elektromagnetischer Strahlung mit einer spezifischen Wellenlänge beim Verarbeiten von Kautschukmischungen. Offenbart werden zudem eine extrudierte Kautschukmischung und ein vulkanisiertes Kautschukprodukt.

Der Gegenstand der Erfindung ist in den beigefügten Ansprüchen definiert.

Ein wesentlicher Arbeitsschritt bei der Herstellung von Fahrzeugreifen ist die Verarbeitung der benötigten Kautschukmischungen, wobei insbesondere die Extrusion entsprechender Kautschukmischungen mit einem Extruder regelmäßig ein zentraler Fertigungsschritt ist. In Abhängigkeit von den physikalisch-chemischen Eigenschaften der Kautschukmischung können diese jedoch nicht unmittelbar in dem für die Verarbeitung vorgesehenen Extruder eingesetzt werden. Vielmehr müssen die Verarbeitungseigenschaften, insbesondere die Viskosität, in vielen Fällen durch eine Vorwärmung der Kautschukmischung angepasst werden. Dieser Prozess wird vom Fachmann auch als "hot feed" Prozess bezeichnet, da eine aufgewärmte Kautschukmischung in den Extruder eingegeben wird. Die hierbei einzustellende Temperatur, die sogenannte Fütterungstemperatur, der aufgewärmten Kautschukmischung ist dabei beispielsweise von der Mooney-Viskosität der Kautschukmischung, den Betriebsparametern des Extruders, beispielsweise der Extruderdrehzahl, der Verweilzeit der vorgewärmten Kautschukmischung auf dem Beschickungsband zum Extruder, der Querschnittsgeometrie der aufgewärmten Kautschukmischung und letztlich auch der herrschenden Umgebungstemperatur abhängig.

Aus dem Stand der Technik ist bekannt, die Temperatur von Kautschukmischungen vor der Extrusion zu erhöhen, beispielsweise durch den Einsatz eines Vorwärmextruders oder eines beheizten Walzwerkes. Siehe zum Beispiel DE 10 2006 016498 A1, WO 2016/092404 A1, JP S52 125569 A, JP S51 92564 U, und CN 112 976 535 A.

Hierdurch kann die ausreichende Prozessierbarkeit auch im Fall von verarbeitungstechnisch anspruchsvollen Kautschukmischungen gewährleistet werden, wodurch die Prozessstabilität erhöht wird.

Die aus dem Stand der Technik bekannten Verfahren werden jedoch häufig als nachteilig empfunden. Insbesondere dauert es mit den herkömmlichen Verfahren regelmäßig sehr lange, bis die zu bearbeitende Kautschukmischung hinreichend ausgeheizt ist. Hierbei ist es insbesondere problematisch, dass für eine hinreichende Prozessierbarkeit regelmäßig auch eine ausreichende Kerntemperatur in der Kautschukmischung eingestellt werden muss. Dies ist in Abhängigkeit von den zur Aufwärmung verwendeten Vorrichtungen und den Abmessungen des bearbeiteten Materialstrangs regelmäßig nur schwer möglich, da mit vielen herkömmlichen Methoden vor allem ein oberflächlicher Energieeintrag erfolgt. Hierdurch sind regelmäßig lange Bearbeitungszeiten nötig, um eine hinreichende Prozessierbarkeit der Kautschukmischung zu gewährleisten.

Die notwendigen langen Bearbeitungszeiten können dabei im Stand der Technik vor allem dadurch realisiert werden, dass die Bandgeschwindigkeit, mit der die Kautschukmischung durch die Heizeinrichtungen geführt wird, niedrig gewählt wird. Alternativ kann bei einer höheren Bandgeschwindigkeit die Abmessung der verwendeten Heizeinrichtung erhöht werden, so dass die Verweilzeit in der Heizeinrichtung hinreichend hoch ist. Diese beiden Lösungskonzepte werden jedoch regelmäßig als unbefriedigend empfunden.

Im ersten Fall führt die reduzierte Bandgeschwindigkeit häufig zu einer Verringerung des pro Zeit erzielbaren Materialdurchsatzes, wodurch die Zeit- und Kosteneffizienz der Vorbehandlung nachteilig beeinflusst wird. Bedingt durch den typischen Aufbau entsprechender Vorrichtungen bedeutet eine langsame Bandgeschwindigkeit im Übergang zwischen der zum Aufwärmen verwendeten Heizeinheit und dem Extruder nachteiliger Weise zudem auch, dass die aufgeheizte Kautschukmischung mehr Wärme an die Umgebung abgeben kann, sodass beim Aufheizen häufig eine höhere Aufheiztemperatur gewählt werden muss, um diesen Temperaturverlust vor der Fütterung des Extruders zu kompensieren. Beim Einsatz von langen Heizstrecken ist wiederum der hohe Platzbedarf nachteilig, wobei es bei großen Heizeinheiten zudem regelmäßig schwerer ist, eine hinreichende Dämmung zu gewährleisten, sodass entsprechende Aufbauten regelmäßig weniger energieeffizient sind.

Die Aufgabe der vorliegenden Erfindung war es, die vorstehend beschriebenen Nachteile des Standes der Technik zu beheben oder zumindest zu verringern.

Insbesondere war es die Aufgabe der vorliegenden Erfindung, ein Verfahren zum Verarbeiten von Kautschukmischungen anzugeben, welches eine zeit- und kosteneffiziente Vortemperierung von Kautschukmischungen ermöglicht.

Hierbei war es eine Aufgabe der vorliegenden Erfindung, dass das anzugebende Verfahren in einer aufgewärmten Kautschukmischung resultieren sollte, welche eine hohe Temperaturhomogenität aufweist, insbesondere auch im Kern der aufgewärmten Kautschukmischung.

Hierbei war es wünschenswert, dass das anzugebende Verfahren apparativ mit vergleichsweise geringem Aufwand betreibbar sein sollte, sodass die für das Verfahren benötigte Vorrichtung einen geringen Platzbedarf erfordert und auch in kleine Fertigungsstraßen integriert werden kann.

Es war eine Aufgabe der vorliegenden Erfindung, dass das anzugebende Verfahren für eine breite Palette an möglichen Kautschukmischungen einsetzbar sein sollte, insbesondere auch für Kautschukmischungen mit einem sehr hohen Naturkautschukanteil, wie sie beispielsweise in Base-Mischungen oder Cap-Wintermischungen eingesetzt werden, und dass es vorzugweise auch in einem kontinuierlichen oder halbkontinuierlichen Betrieb betreibbar sein sollte.

Es war eine ergänzende Aufgabe der vorliegenden Erfindung, dass das anzugebende Verfahren eine zuverlässige Kontrolle der für die Kautschukmischung erhaltenen Temperatur ermöglichen sollte, wobei das anzugebende Verfahren wünschenswerterweise in der Lage sein sollte, detektierte Abweichungen in der Zieltemperatur der Kautschukmischung durch eine vorzugsweise automatische Anpassung der Betriebsparameter der Aufwärmschritte zu korrigieren.

Insoweit war es eine Aufgabe der vorliegenden Erfindung, dass das anzugebende Verfahren eine gegenüber dem Stand der Technik verbesserte Energieeffizienz aufweisen sollte, beispielsweise durch den Einsatz von leichter dämmbaren Vorrichtungen, effizienteren Aufwärmmethoden und höheren Bandgeschwindigkeiten, die zu geringeren Wärmeverlusten führen.

Es war eine ergänzende Aufgabe der vorliegenden Erfindung, ein darauf aufbauendes Verfahren zur Herstellung eines vulkanisierten Kautschukprodukts, insbesondere eines Fahrzeugreifens, anzugeben.

Es war eine weitere ergänzende Aufgabe, eine Vorrichtung anzugeben, die für die Durchführung des anzugebenden Verfahrens geeignet ist.

Ebenso war es eine Aufgabe der vorliegenden Erfindung, eine Verwendung für elektromagnetische Strahlung einer spezifischen Wellenlänge bei der Verarbeitung von Kautschukmischungen anzugeben.

Im Lichte der vorstehenden Ausführungen steht die Erfindung zudem im Zusammenhang mit der Aufgabe, eine extrudierte Kautschukmischung und ein daraus herstellbares vulkanisiertes Kautschukprodukt anzugeben.

Die Erfinder der vorliegenden Erfindung haben nunmehr erkannt, dass sich die vorstehend beschriebenen Aufgaben überraschenderweise lösen lassen, wenn der Aufheizprozess vor dem Extruder in einem zweistufigen Verfahren ausgeführt wird, bei dem vor dem finalen Schritt des Erwärmens vor dem Extruder ein zusätzlicher Vorwärmschritt vorgeschaltet wird, bei dem zum Vorwärmen Mikrowellenstrahlung verwendet wird, wie es in den Ansprüchen definiert ist.

In diesem Verfahren wird die Mikrowellentechnologie zur schnellen Vorwärmung der Kautschukmischung eingesetzt, wobei in dem zweistufigen Prozess vorteilhafterweise eine besonders homogene Erwärmung der Kautschukmischung erzielt werden kann, bei der auch der Kern der Kautschukmischung ausreichend erwärmt wird. Die Vorwärmung kann dabei beispielsweise auf eine Temperatur erfolgen, die noch signifikant unter der Zieltemperatur liegt, die dann erst durch die finale Erwärmung mittels einer zweiten Heizeinheit eingestellt wird.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Vorrichtungen, extrudierter Kautschukmischungen, vulkanisierter Kautschukprodukte und Verwendungen ergeben sich aus den Merkmalen bevorzugter Verfahren.

Die Erfindung betrifft ein Verfahren zum Verarbeiten von Kautschukmischungen, insbesondere bei der Herstellung von Fahrzeugreifen, umfassend die folgenden Verfahrensschritte:
a) Herstellen oder Bereitstellen einer Kautschukmischung,
b) Vorwärmen der Kautschukmischung mit zumindest einer ersten Heizeinheit zum Erhalt einer vorgewärmten Kautschukmischung,
c) Erwärmen der vorgewärmten Kautschukmischung mit zumindest einer zweiten Heizeinheit zum Erhalt einer aufgewärmten Kautschukmischung, und
d) Einbringen und Verarbeiten der aufgewärmten Kautschukmischung in einem Extruder zum Erhalt einer extrudierten Kautschukmischung,
wobei das Vorwärmen durch elektromagnetische Strahlung mit dem Intensitätsmaximum bei einer Wellenlänge im Bereich von 0,1 bis 30 cm erfolgt.

Das erfindungsgemäße Verfahren ist insbesondere für den Einsatz in der Fertigung von Fahrzeugreifen geeignet und ermöglicht die zuverlässige Verarbeitung von typischen Kautschukmischungen, welche in diesem Bereich eingesetzt werden.

In dem erfindungsgemäßen Verfahren wird zunächst eine Kautschukmischung hergestellt oder bereitgestellt. Das Herstellen kann dabei beispielsweise in üblicher Weise durch das Vermischen von typischen Komponenten entsprechender Kautschukmischungen erfolgen, die dem Fachmann bekannt sind. Alternativ kann eine entsprechende Kautschukmischung jedoch auch direkt bereitgestellt werden, beispielsweise, wenn sie von einem Zulieferer bezogen wird.

In dem erfindungsgemäßen Verfahren erfolgt zunächst das Vorwärmen der Kautschukmischung mit einer ersten Heizeinheit und anschließend das weitere Erwärmen der so vorgewärmten Kautschukmischung mit einer zweiten Heizeinheit. Für den Fachmann ist klar, dass im erfindungsgemäßen Verfahren somit zwei voneinander verschiedene Heizeinheiten eingesetzt werden, wobei die final vorgegebene Temperatur der aufgewärmten Kautschukmischung, die anschließend in den Extruder gegeben werden soll, somit erst durch die zweite Heizeinheit eingestellt wird.

In Übereinstimmung mit dem fachmännischen Verständnis sind im Rahmen der vorliegenden Erfindung die Adjektive "vorgewärmt" und "aufgewärmt" lediglich mit der technischen Information verbunden, dass die entsprechend bezeichneten Kautschukmischungen eine höhere Temperatur aufweisen, als die hergestellte oder bereitgestellte Kautschukmischung. Im Rahmen der vorliegenden Erfindung werden die beiden Adjektive nämlich vor allem dazu verwendet, die entsprechenden vorgewärmten Kautschukmischungen und aufgewärmten Kautschukmischungen voneinander sowie von der eingesetzten Kautschukmischung und der aus dem Extruder erhaltenen extrudierten Kautschukmischung sprachlich präzise zu unterscheiden.

Erst die aufgewärmte Kautschukmischung, d.h. die Kautschukmischung, die die erste und die zweite Heizeinheit durchlaufen hat, wird in einen Extruder eingebracht und dort verarbeitet, wodurch am Auslass des Extruders eine extrudierte Kautschukmischung erhalten wird, welche anschließend in üblicher Weise weiterverarbeitet werden kann.

Das erfindungsgemäße Verfahren wird dabei so durchgeführt, dass der zweistufige Ausheizprozess auf eine spezifische Form des Vorwärmens zurückgreift, nämlich auf ein Vorwärmen mit elektromagnetischer Strahlung. Hierbei wird eine spezifische Art der elektromagnetischen Strahlung verwendet, nämlich Mikrowellen mit einer Wellenlänge im Bereich von 0,1 bis 30 cm.

Mikrowellen und zu deren Erzeugung geeignete Vorrichtungen sind dem Fachmann dabei grundsätzlich bekannt. In Übereinstimmung mit dem fachmännischen Verständnis ist es beim Einsatz von Mikrowellen nicht zwangsläufig nötig, dass die eingesetzte elektromagnetische Strahlung keinerlei Anteile außerhalb des Mikrowellenbereichs aufweist. Vielmehr kann die zum Vorwärmen eingesetzte elektromagnetische Strahlung in Abhängigkeit von der zur Erzeugung der Strahlung eingesetzten Vorrichtung auch bei anderen Wellenlängen eine gewisse Intensität aufweisen.

Im Rahmen der vorliegenden Erfindung wird deswegen definiert, dass das Intensitätsmaximum der eingesetzten elektromagnetischen Strahlung im angegebenen Wellenlängenbereich liegen muss, wie es für Mikrowellenstrahlung regelmäßig der Fall ist. Hierdurch wird auch klargestellt, dass sonstige Arten von Strahlung, die ggf. auch in dem vorstehend definierten Wellenlängenbereich eine geringe Intensität zeigen, deren Intensitätsmaximum jedoch außerhalb des entsprechenden Bereichs liegt, nicht unter die vorstehend angegebene Definition fallen.

Die Aussage, dass das Vorwärmen durch elektromagnetische Strahlung erfolgt, bedeutet in Übereinstimmung mit dem fachmännischen Verständnis, dass die elektromagnetische Strahlung das Vorwärmen, d. h. die Temperaturerhöhung gegenüber der eingesetzten Kautschukmischung zumindest teilweise, bevorzugt vollständig, bedingt.

Die Erfinder der vorliegenden Erfindung konnten besonders geeignete Wellenlängenbereiche identifizieren, die für das Vorwärmen üblicher Kautschukmischungen, wie sie beispielsweise im Bereich der Fahrzeugreifenfertigung eingesetzt werden, besonders geeignet sind. Bevorzugt ist nämlich ein erfindungsgemäßes Verfahren, wobei das Vorwärmen durch elektromagnetische Strahlung mit dem Intensitätsmaximum bei einer Wellenlänge im Bereich von 0,5 bis 25 cm, bevorzugt im Bereich von 2,5 bis 20 cm, besonders bevorzugt im Bereich von 7,5 bis 15 cm, erfolgt.

Auch wenn es prinzipiell denkbar ist, dass das Vorwärmen durch weitere Heizeinrichtungen unterstützt wird, beispielsweise durch ein erwärmtes Förderband, versteht der Fachmann, dass es bevorzugt ist, wenn das Vorwärmen überwiegend und ganz besonders bevorzugt im Wesentlichen vollständig durch die elektromagnetische Strahlung bedingt ist. Bevorzugt ist deshalb ein erfindungsgemäßes Verfahren, wobei das Vorwärmen ganz besonders bevorzugt zu mehr als 50 %, bevorzugt zu mehr als 75 %, besonders bevorzugt im Wesentlichen vollständig, durch die elektromagnetische Strahlung, erfolgt.

Dem Fachmann sind geeignete Vorrichtungen für die Erzeugung entsprechender elektromagnetischer Strahlung, wie sie vorliegend beim Vorwärmen eingesetzt werden, aus anderen Bereichen der Technik bekannt. Hierbei handelt es sich regelmäßig um sogenannte Mikrowellenstrahler, die beispielsweise in der Form von Mikrowellenöfen eingesetzt werden können. Für die meisten Fälle bevorzugt ist deshalb ein erfindungsgemäßes Verfahren, wobei das Vorwärmen der Kautschukmischung mit zumindest einer ersten Heizeinheit erfolgt, die ausgewählt ist aus der Gruppe bestehend aus Mikrowellenstrahlern, deren Intensitätsmaximum der Emission bevorzugt bei einer Wellenlänge im Bereich von 0,1 bis 30 cm, besonders bevorzugt im Bereich von 0,5 bis 25 cm, ganz besonders bevorzugt im Bereich von 2,5 bis 20 cm, weiter bevorzugt im Bereich von 7,5 bis 15 cm, liegt.

Es kann als Vorteil des erfindungsgemäßen Verfahrens gesehen werden, dass dieses hinsichtlich der zur Einstellung der gewünschten Zieltemperatur verwendeten zweiten Heizeinheit sehr flexibel ist und insbesondere auf solche Vorrichtungen zurückgegriffen werden kann, die aus dem Stand der Technik bekannt sind, wie beispielsweise Vonnrärmextruder oder temperierte Walzwerke. Nach Einschätzung der Erfinder ergibt sich eine besonders vorteilhafte Ausgestaltung des erfindungsgemäßen Verfahrens jedoch dann, wenn als zweite Heizeinheit ein oder mehr Wärmestrahler eingesetzt werden, wobei insbesondere Infrarotstrahler bevorzugt sind. Entsprechende Wärmestrahler lassen sich über die Anpassung der Leistung nämlich besonders effizient an die jeweiligen Erfordernisse einstellen. Zudem erlauben solche Wärmestrahler regelmäßig eine besonders energieeffiziente Aufwärmung von Kautschukmischungen, insbesondere, wenn diese, wie regelmäßig üblich, durch den enthaltenen Ruß eine Schwarzfärbung aufweisen und entsprechend Wärmestrahlung besonders effizient absorbieren. Insbesondere in der Kombination mit einer nachgeschalteten Temperaturmessung ist der Einsatz von Wärmestrahlern bevorzugt, da sich diese besonders leicht in Abhängigkeit von gemessenen Temperaturabweichungen regeln lassen. Bevorzugt ist ein erfindungsgemäßes Verfahren, wobei das Erwärmen der vorgewärmten Kautschukmischung mit zumindest einer zweiten Heizeinheit erfolgt, die ausgewählt ist aus der Gruppe bestehend aus Vorwärmextrudern, temperierten Walzwerken und Wärmestrahlern, bevorzugt ausgewählt ist aus der Gruppe bestehend aus Wärmestrahlern, insbesondere Infrarotstrahlern.

Nach Einschätzung der Erfinder ergibt sich insbesondere bei der Kombination des Einsatzes von elektromagnetischer Strahlung mit unterschiedlicher Wellenlänge in den zwei Heizstufen des erfindungsgemäßen Verfahrens in synergistischer Weise eine besonders effiziente Verfahrensführung, insbesondere da die nachgelagerte Erwärmung mittels eines Wärmestrahlers die Oberfläche der Kautschukmischung, welche schneller erkalten kann, stärker erwärmt als das Innere der vorgewärmten Kautschukmischung, sodass insgesamt eine aufgewärmte Kautschukmischung mit einem besonders homogenen Temperaturprofil erhalten werden kann.

Die Erfinder der vorliegenden Erfindung konnten insoweit besonders geeignete Wellenlängenbereiche identifizieren, die für entsprechende Wärmestrahler besonders geeignet sind. In Übereinstimmung mit den vorstehenden Ausführungen ist es dabei auch bei dem Erwärmen bevorzugt, wenn die entsprechende Temperaturerhöhung überwiegend bzw. idealerweise vollständig durch entsprechende elektromagnetische Strahlung erfolgt. Bevorzugt ist insoweit ein erfindungsgemäßes Verfahren, wobei das Erwärmen der vorgewärmten Kautschukmischung durch elektromagnetische Strahlung mit dem Intensitätsmaximum bei einer Wellenlänge im Bereich von 780 nm bis 50000 nm, bevorzugt im Bereich von 780 bis 3000 nm, besonders bevorzugt im Bereich von 780 bis 1400 nm, erfolgt. Bevorzugt ist zudem ein erfindungsgemäßes Verfahren, wobei das Erwärmen ganz besonders bevorzugt zu mehr als 50 %, bevorzugt zu mehr als 75 %, besonders bevorzugt im Wesentlichen vollständig, durch die elektromagnetische Strahlung, erfolgt.

Geeignete Wärmestrahler für den Einsatz als zweite Heizvorrichtung im erfindungsgemäßen Verfahren sind dem Fachmann grundsätzlich aus anderen Bereichen der Technik bekannt. Bevorzugt ist insoweit ein erfindungsgemäßes Verfahren, wobei das Erwärmen der vorgewärmten Kautschukmischung mit zumindest einer zweiten Heizeinheit erfolgt, die ausgewählt ist aus der Gruppe bestehend aus Wärmestrahlern, deren Intensitätsmaximum der Emission bei einer Wellenlänge im Bereich von 780 nm bis 50000 nm, bevorzugt im Bereich von 780 bis 3000 nm, besonders bevorzugt im Bereich von 780 bis 1400 nm, liegt.

Die Erfinder der vorliegenden Erfindung konnten zudem besonders geeignete Leistungsbereiche identifizieren, mit denen die erste bzw. zweite Heizeinheit des erfindungsgemäßen Verfahrens beim Einsatz von elektromagnetischer Strahlung besonders effizient betrieben werden können. Bevorzugt ist nämlich ein erfindungsgemäßes Verfahren, wobei das Vorwärmen durch elektromagnetische Strahlung mit einer Leistung der ersten Heizeinheit von bis zu 200 kW, bevorzugt bis zu 100 kW, besonders bevorzugt bis zu 70 kW, erfolgt, wobei die Leistung der ersten Heizeinheit besonders bevorzugt steuerbar ist und/oder wobei die erste Heizeinheit bevorzugt diskontinuierlich betrieben wird, und/oder wobei das Erwärmen durch elektromagnetische Strahlung mit einer Leistung der zweiten Heizeinheit von bis zu 200 kW, bevorzugt bis zu 100 kW, besonders bevorzugt bis zu 70 kW, wobei die Leistung der zweiten Heizeinheit besonders bevorzugt steuerbar ist und/oder wobei die zweite Heizeinheit bevorzugt diskontinuierlich betrieben wird.

Die im erfindungsgemäßen Verfahren sinnvollerweise einzustellenden Temperaturen für die Kautschukmischungen hängen von den physikalisch-chemischen Eigenschaften der jeweiligen Kautschukmischung und den für den Einsatz im Extruder benötigten Eigenschaften ab, wobei insbesondere die Viskosität häufig ein für die Verarbeitbarkeit wichtiger Faktor ist. Mit Blick auf die in der Fertigung von Fahrzeugreifen üblicherweise eingesetzten Kautschukmischungen konnten die Erfinder der vorliegenden Erfindung für die entsprechenden vorgewärmten bzw. aufgewärmten Kautschukmischungen Temperaturbereiche identifizieren, mit denen sich das erfindungsgemäße Verfahren besonders effizient durchführen lässt. Bevorzugt ist nämlich ein erfindungsgemäßes Verfahren, wobei die mittlere Temperatur der vorgewärmten Kautschukmischung im Bereich von 25 bis 130 °C, bevorzugt im Bereich von 30 bis 100 °C, besonders bevorzugt im Bereich von 35 bis 80 °C, ganz besonders bevorzugt im Bereich von 40 bis 70°C, liegt. Bevorzugt ist zudem ein erfindungsgemäßes Verfahren, wobei die mittlere Temperatur der aufgewärmten Kautschukmischung im Bereich von 40 bis 200 °C, bevorzugt im Bereich von 50 bis 160 °C, besonders bevorzugt im Bereich von 60 bis 130 °C, ganz besonders bevorzugt im Bereich von 70 bis 110 °C, liegt.

Nach Einschätzung der Erfinder der vorliegenden Erfindung ergibt sich ein besonders vorteilhaftes erfindungsgemäßes Verfahren dann, wenn das Vorwärmen an der insgesamt erreichten Temperaturerhöhung gegenüber der eingesetzten Kautschukmischung einen hinreichend großen Anteil hat. Gleichzeitig ist es jedoch mit Blick auf die Homogenität des eingestellten Temperaturprofils und die Effizienz der Verfahrensführung wiederum vorteilhaft, wenn das Vorwärmen mit der Mikrowellenstrahlung keinen zu großen Anteil an der gesamten Temperaturerhöhung hat. Ohne an diese Einschätzung gebunden sein zu wollen, scheint der Einsatz von Mikrowellenstrahlung für die präzise Endeinstellung der gewünschten Temperatur der aufgewärmten Kautschukmasse nicht in gleicher Weise geeignet wie der Einsatz andere Heizeinheiten. Es erscheint insbesondere vorteilhaft zu sein, im zweiten Schritt solche Methoden zur Erwärmung zu verwenden, die stärker auf die Oberfläche der Kautschukmischung wirken, um die an dieser Grenzschicht auftretende stärkere Abkühlung im Verfahren zu kompensieren. Die resultierende Verfahrensführung hat sich dabei auch mit Blick auf die Energieeffizienz als besonders vorteilhaft erwiesen. Bevorzugt ist folglich ein erfindungsgemäßes Verfahren, wobei die Temperaturdifferenz zwischen der mittleren Temperatur der Kautschukmischung in Verfahrensschritt a) und der vorgewärmten Kautschukmischung im Bereich von 25 bis 65 %, bevorzugt im Bereich von 30 bis 60 %, besonders bevorzugt im Bereich von 35 bis 55 %, der Temperaturdifferenz zwischen der mittleren Temperatur der Kautschukmischung in Verfahrensschritt a) und der aufgewärmten Kautschukmischung, beträgt.

Wie vorstehend erläutert, kann es als besonderer Vorteil des erfindungsgemäßen Verfahrens gesehen werden, dass ein Temperatursensor vorgesehen werden kann, der die Temperatur der Kautschukmischung misst, um dadurch eine direkte Information über die Temperatur bzw. mittelbar die Verarbeitungseigenschaften der entsprechenden Kautschukmischung zu erhalten. Die Erfinder der vorliegenden Erfindung schlagen nunmehr vor, dass es besonders vorteilhaft ist, wenn das zweistufige Aufheizverfahren ganz oder teilweise in Abhängigkeit von den aufgenommenen Werten gesteuert bzw. geregelt wird. Dies ist insbesondere unter Verwendung eines Wärmestrahlers für die zweite Heizeinheit besonders leicht möglich, da in diesem Fall beide Heizeinheiten besonders reaktionsschnell in ihrer Leistung gesteuert werden können. Bevorzugt ist somit ein erfindungsgemäßes Verfahren, wobei die Temperatur der vorgewärmten Kautschukmischung und/oder der aufgewärmten Kautschukmischung mit zumindest einem Temperatursensor, bevorzugt mit einem Infrarotsensor, bestimmt wird, wobei das Vorwärmen und/oder das Erwärmen besonders bevorzugt mittels einer Steuereinheit in Abhängigkeit von den Messdaten des Temperatursensors gesteuert und/oder geregelt wird.

Es kann als großer Vorteil des erfindungsgemäßen Verfahrens gesehen werden, dass mit diesem eine aufgewärmte Kautschukmischung erhalten werden kann, welche über ein besonders homogenes Temperaturprofil verfügt, wobei insbesondere der Gradient zwischen der Oberflächentemperatur und der Kerntemperatur, üblicherweise gemessen an dem Punkt der Kautschukmischung, der von allen Rändern den größten Abstand aufweist, besonders gering gehalten werden kann. Nach Einschätzung der Erfinder ist eine Verfahrensführung, bei der eine entsprechende niedrige Temperaturdifferenz zwischen der Oberfläche und dem Kern der Kautschukmischung eingestellt wird, mit Blick auf die Qualität und Homogenität der mittels Extrusion herstellbaren extrudierten Kautschukmischung ganz besonders bevorzugt, was sich vorteilhafterweise regelmäßig auch in positiven Eigenschaften der daraus herstellbaren Kautschukprodukte widerspiegelt. Bevorzugt ist deshalb auch ein erfindungsgemäßes Verfahren, wobei das Vorwärmen und das Erwärmen so ausgeführt werden, dass der Temperaturunterschied zwischen der Oberflächentemperatur der aufgewärmten Kautschukmischung und der Kerntemperatur der aufgewärmten Kautschukmischung weniger als 20 °C, bevorzugt weniger als 10 °C, besonders bevorzugt weniger als 5 °C, ganz besonders bevorzugt weniger als 2 °C, beträgt.

Es kann als Vorteil des erfindungsgemäßen Verfahrens gesehen werden, dass die Vorwärmstufe mit der ersten Heizeinheit so gestaltet werden kann, dass in der resultierenden vorgewärmten Kautschukmischung eine gegenüber der Oberflächentemperatur erhöhte Kerntemperatur vorliegt, sodass sich eine besonders günstige Kombination mit einem nachgeschalteten Verfahren zum Erwärmen ergibt, welches vornehmlich eine oberflächliche Erwärmung zur Folge hat, wie beispielsweise beim Einsatz von Wärmestrahlung. Bevorzugt ist deshalb ein erfindungsgemäßes Verfahren, wobei die mittlere Kerntemperatur der vorgewärmten Kautschukmischung höher ist als die Oberflächentemperatur der vorgewärmten Kautschukmischung.

Grundsätzlich ist das erfindungsgemäße Verfahren für alle Arten von Kautschukmischungen geeignet, sodass es vorteilhafterweise eine große Flexibilität und einen breiten Anwendungsbereich eröffnet, insbesondere auch für Kautschukmischungen, die über einen hohen Anteil an Naturkautschuk verfügen. In den für die meisten Industriezweige relevanten Ausführungsformen wird es sich bei der Kautschukmischung jedoch um eine vulkanisierbare Kautschukmischung handeln, d. h. um eine Kautschukmischung, welche durch das dem Fachmann als Vulkanisation bekannte Verfahren beispielsweise über eine Schwefelvernetzung in einen vernetzten Gummiwerkstoff überführt werden kann. Alternativ kann es sich jedoch auch um kautschukhaltige Vormischungen handeln, welche angesichts ihrer Zusammensetzung noch nicht vulkanisierbar sind, beispielsweise weil noch kein schwefelhaltiges Vulkanisationssystem zugesetzt wurde. Bevorzugt ist somit ein erfindungsgemäßes Verfahren, wobei die Kautschukmischung eine vulkanisierbare Kautschukmischung oder eine kautschukhaltige Vormischung zur Herstellung einer vulkanisierbaren Kautschukmischung, bevorzugt eine vulkanisierbare Kautschukmischung, ist.

Trotz der grundsätzlichen breiten Anwendbarkeit auf verschiedene Kautschukmischungen konnte die Erfinder der vorliegenden Erfindung besonders geeignete Komponenten für den Einsatz in entsprechenden Kautschukmischungen identifizieren, aus denen sich prinzipiell Kautschukmischungen erhalten lassen, die für den Einsatz im erfindungsgemäßen Verfahren besonders geeignet sind. Bevorzugt ist nämlich ein erfindungsgemäßes Verfahren, wobei die Kautschukmischung wenigstens einen Dienkautschuk umfasst, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Dienkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR), wobei der Dienkautschuk ganz besonders bevorzugt natürliches Polyisopren ist. Bevorzugt ist auch ein erfindungsgemäßes Verfahren, wobei die Kautschukmischung 0,1 bis 100 phr eines oder mehrerer Füllstoffe umfasst, wobei die Füllstoffe ausgewählt sind aus der Gruppe bestehend aus polaren und unpolaren Füllstoffen, bevorzugt ausgewählt sind aus der Gruppe bestehend aus Ruß, Aluminiumhydroxid, Titandioxid, Magnesiumoxid, amorphem Siliciumdioxid und Schichtsilikaten, besonders bevorzugt ausgewählt sind aus der Gruppe bestehend aus Ruß und amorphem Siliciumdioxid.

Insbesondere beim Einsatz eines Wärmestrahlers als zweite Heizeinrichtung kann es wegen der ausgezeichneten Absorptionseigenschaften als besonders vorteilhaft angesehen werden, wenn die Kautschukmischung mehr als 2 phr, bevorzugt mehr als 5 phr, besonders bevorzugt mehr als 10 phr, ganz besonders bevorzugt mehr als 20 phr, Ruß umfasst.

Die im Rahmen der vorliegenden Erfindung verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen, die sich entsprechend zu 100 addiert.

Über die vorstehenden Ausführungen hinaus konnten die Erfinder der vorliegenden Erfindung auch sinnvolle Viskositätsbereiche identifizieren, mit denen in den üblicherweise relevanten Verfahren besonders vorteilhafte Ergebnisse erzielt werden können und die sich vorteilhafterweise mit dem erfindungsgemäßen Verfahren besonders effizient einstellen lassen. Bevorzugt ist ein erfindungsgemäßes Verfahren, wobei die Kautschukmischung und/oder die vorgewärmte Kautschukmischung und/oder die aufgewärmte Kautschukmischung eine Mooney-Viskosität ML (1+3 / 100 °C) gemäß DIN 53523-2-1991 im Bereich von 20 bis 200 MU, bevorzugt im Bereich von 30 bis 140 MU, besonders bevorzugt im Bereich von 40 bis 120 MU, aufweist.

Es kann als besonderer Vorteil des erfindungsgemäßen Verfahrens gesehen werden, dass dieses kontinuierlich oder zumindest halbkontinuierlich betrieben werden kann. Ganz besonders bevorzugt ist hierbei jedoch die halbkontinuierliche Verfahrensführung, die auch als "stop-and-go" bezeichnet wird. Bei einer entsprechenden Verfahrensführung wird die eingesetzte Kautschukmischung schrittweise durch die verwendete Vorrichtung geführt, sodass sich beispielsweise Heizphasen mit Förderphasen abwechseln. Eine entsprechende Verfahrensführung ist nicht nur für die Kombination mit vielen in der Praxis relevanten Extrudern besonders geeignet, sondern führt nach Einschätzung der Erfinder auch zu besonders guten Ergebnissen hinsichtlich der Aufwärmung der Kautschukmischung, insbesondere mit Blick auf ein homogenes Temperaturprofil. Bevorzugt ist ein erfindungsgemäßes Verfahren, wobei das Verfahren als kontinuierliches oder halbkontinuierliches Verfahren, bevorzugt als kontinuierliches Verfahren, betrieben wird.

Auch wenn es grundsätzlich möglich ist, eine stationär verbleibende Kautschukmischung unter Verwendung der vorstehend beschriebenen Heizeinheiten durch sequentielle Bearbeitung zu erwärmen, beispielsweise in einer Vorrichtung, die die verschiedenen Heizeinheiten in einer Form umfasst, dass diese auf das an der gleichen Stelle angeordnete Material einwirken können, ist es mit Blick auf den erzielbaren Materialdurchsatz eindeutig bevorzugt, die Kautschukmischung relativ zu stationären Heizeinheiten zu befördern, sodass eine im erfindungsgemäßen Verfahren bearbeitete Kautschukmischung die Heizeinheiten nacheinander durchläuft. Bevorzugt ist vor diesem Hintergrund ein erfindungsgemäßes Verfahren, wobei die Kautschukmischung in einer Transportvorrichtung geführt wird, wobei die Transportvorrichtung bevorzugt ausgewählt ist aus der Gruppe bestehend aus Förderbändern, insbesondere Transportbändern aus Kunststoff oder textilen Materialien, und Förderrohren, bevorzugt Förderbändern, wobei die Bandgeschwindigkeit bevorzugt bis zu 20 m/min, besonders bevorzugt bis zu 10 m/min, beträgt, wobei die Transportvorrichtung vorzugsweise im Bereich der ersten Heizeinheit und/oder im Bereich der zweiten Heizeinheit, bevorzugt im Bereich beider Heizeinheiten, aus Metall ausgebildet ist.

Im erfindungsgemäßen Verfahren können vorteilhafterweise alle gebräuchlichen Extruder eingesetzt werden. Nach Einschätzung der Erfinder ist jedoch die Verwendung von Schneckenextrudern mit einer Extruderschnecke für die abschließende Verarbeitung der Kautschukmischung besonders geeignet. Bevorzugt ist daher ein erfindungsgemäßes Verfahren, wobei der Extruder ein Schneckenextruder mit einer, zwei oder mehreren Extruderschnecken, bevorzugt ein Schneckenextruder mit einer Extruderschnecke ist.

Für den Fachmann ist im Lichte der vorstehenden Ausführungen klar, dass die Erfindung auch ein Verfahren zur Herstellung von vulkanisierten Kautschukprodukten umfasst, wobei dieses Verfahren insbesondere für die Herstellung von Fahrzeugreifen, vor allem Fahrzeugluftreifen, relevant ist. Bei einem entsprechenden Verfahren wird die mit dem erfindungsgemäßen Verfahren zum Verarbeiten von Kautschukmischungen erhaltene extrudierte Kautschukmischung zu einer Kautschukkomponente verarbeitet. Bei einer solchen Kautschukkomponente kann es sich beispielsweise um einen Laufstreifen oder um ein Verbundmaterial handeln, in dem beispielsweise in üblicher Weise Festigkeitsträger eingebettet sind. Aus der Kautschukkomponente wird zusammen mit weiteren Bestandteilen des herzustellenden Kautschukprodukts ein Produktrohling hergestellt, beispielsweise ein Fahrzeugreifenrohling, welcher beispielsweise eine Karkasse und einen oberhalb der Karkasse angeordneten Laufstreifen sowie zahlreiche weitere Komponenten umfassen kann. Der entsprechende Produktrohling wird anschließend durch Vulkanisation in das vulkanisierte Kautschukprodukt überführt, wobei die Vulkanisation mit einem üblichen Verfahren erfolgen kann, dessen Vulkanisationsbedingungen vom Fachmann auf die jeweiligen Kautschukmischungen abgestimmt werden.

Die Erfindung betrifft daher auch ein Verfahren zur Herstellung eines vulkanisierten Kautschukprodukts, umfassend die Schritte des erfindungsgemäßen Verfahrens zum Verarbeiten von Kautschukmischungen, zusätzlich umfassend die Verfahrensschritte:
e) Herstellen einer Kautschukkomponente, umfassend die extrudierte Kautschukmischung,
f) Herstellen eines Produktrohlings, umfassend die Kautschukkomponente, und
g) Vulkanisieren des Produktrohlings zum Erhalt des vulkanisierten Kautschukprodukts.

Bevorzugt ist insoweit ein erfindungsgemäßes Verfahren, wobei die Kautschukkomponente eine Komponente eines Fahrzeugreifens ist, wobei der Produktrohling ein Fahrzeugreifenrohling ist und wobei das vulkanisierte Kautschukprodukt ein Fahrzeugreifen, bevorzugt ein Fahrzeugluftreifen, ist.

Vor dem Hintergrund der vorstehenden Ausführungen ist es für den Fachmann ersichtlich, dass die Erfindung im engen Zusammenhang mit einer extrudierten Kautschukmischung, welche mit dem erfindungsgemäßen Verfahren hergestellt werden kann, sowie mit einem entsprechenden vulkanisierten Kautschukprodukt steht. Offenbart wird somit auch eine extrudierte Kautschukmischung, hergestellt oder herstellbar mit dem erfindungsgemäßen Verfahren zum Verarbeiten von Kautschukmischungen. Offenbart wird deshalb auch ein vulkanisiertes Kautschukprodukt, insbesondere Fahrzeugreifen, hergestellt oder herstellbar mit dem erfindungsgemäßen Verfahren zur Herstellung eines vulkanisierten Kautschukprodukts.

Die Erfindung betrifft auch eine Vorrichtung zum Verarbeiten von Kautschukmischungen, bevorzugt für den Einsatz in einem erfindungsgemäßen Verfahren zum Verarbeiten von Kautschukmischungen, umfassend:
v1) zumindest eine erste Heizeinheit zum Vorwärmen von Kautschukmischungen,
v2) zumindest eine zweite Heizeinheit zum Erwärmen von vorgewärmten Kautschukmischungen,
v3) einen Extruder, und
v4) eine Transportvorrichtung zum Transport einer Kautschukmischung zum Extruder,
wobei die erste Heizeinheit ausgewählt ist aus der Gruppe bestehend aus Mikrowellenstrahlern, deren Intensitätsmaximum der Emission bei einer Wellenlänge im Bereich von 0,1 bis 30 cm, liegt
wobei die zweite Heizeinheit ausgewählt ist aus der Gruppe bestehend aus Vorwärmextrudern, temperierten Walzwerken und Wärmestrahlern, bevorzugt ausgewählt ist aus der Gruppe bestehend aus Wärmestrahlern, und
wobei die zweite Heizeinheit bezogen auf die Transportvorrichtung zwischen der ersten Heizeinheit und dem Extruder angeordnet ist.

Die vorstehende Vorrichtung ist besonders bevorzugt, weil mit ihr das erfindungsgemäße Verfahren in besonders effizienter Weise durchgeführt werden kann, wobei sich die vorstehend beschriebenen Vorteile ergeben. Für den Fachmann ist klar, dass bevorzugte Vorrichtungen dazu geeignet sind, das erfindungsgemäße Verfahren in bevorzugten Ausführungsformen auszuführen.

Bevorzugt ist insoweit insbesondere eine erfindungsgemäße Vorrichtung, zusätzlich umfassend zumindest einen Temperatursensor zum Detektieren der Temperatur einer Kautschukmischung, und/oder zusätzlich umfassend zumindest eine Steuereinheit zum Steuern der ersten Heizeinheit und/oder der zweiten Heizeinheit, bevorzugt in Abhängigkeit von den Messdaten des Temperatursensors.

Für den Fachmann war ausgehend von seinem Fachwissen nicht absehbar, dass die Verwendung der vorstehend definierten elektromagnetischen Strahlung zur Vorwärmung von Kautschukmischungen bei deren Verarbeitung die vorstehend beschriebenen Vorteile mit sich bringt, insbesondere hinsichtlich der Reduktion von Temperaturgradienten im Material und der Steigerung der Verarbeitungsgeschwindigkeit. Die Erfindung betrifft daher abschließend auch die Verwendung von elektromagnetischer Strahlung mit dem Intensitätsmaximum bei einer Wellenlänge im Bereich von 0,1 bis 30 cm beim Vorwärmen einer Kautschukmischung vor dem Erwärmen der Kautschukmischung mit einer weiteren Heizeinheit zur Verringerung von Temperaturgradienten in der aufgewärmten Kautschukmischung und zur Steigerung der Verarbeitungsgeschwindigkeit.

Nachfolgend werden bevorzugte Ausführungsformen der Erfindung unter Bezugnahme auf die beiliegenden Zeichnungen näher erläutert und beschrieben. Dabei zeigen:
- Fig. 1: eine schematische Darstellung einer beispielhaften Vorrichtung zum Verarbeiten von Kautschukmischungen in einer nicht erfindungsgemäßen Ausführungsform; und
- Fig. 2: eine schematische Darstellung einer beispielhaften erfindungsgemäßen Vorrichtung zum Verarbeiten von Kautschukmischungen in einer bevorzugten Ausführungsform.

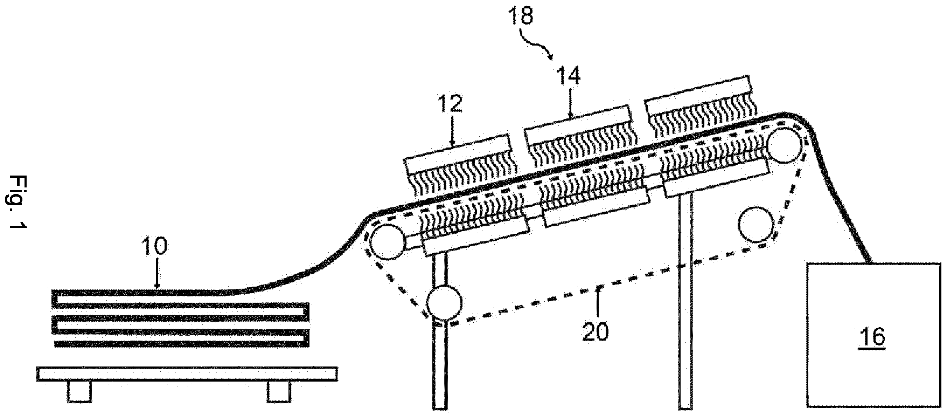

Fig. 1 zeigt eine schematische Darstellung einer beispielhaften Vorrichtung 18, welche grundsätzlich zum Verarbeiten von Kautschukmischungen geeignet ist. Fig. 1 zeigt dabei jedoch eine nichterfindungsgemäße Vorrichtung 18, mit der das erfindungsgemäße Verfahren nicht ausgeführt werden kann, die im Rahmen der vorliegenden Erfindung jedoch auch offenbart wird. Fig. 1 zeigt insoweit eine Vorrichtung 18, welche eine als Förderband ausgeführte Transportvorrichtung 20 umfasst, die eine strangförmige Kautschukmischung 10 durch eine erste Heizeinheit 12 und eine zweite Heizeinheit 14 sowie eine weitere Heizeinheit in Richtung eines Extruders 16 führt.

Im Unterschied zu dem erfindungsgemäßen Verfahren verwendet keine der in Fig. 1 gezeigten Heizeinheiten elektromagnetische Strahlung, deren Intensitätsmaximum bei einer Wellenlänge im Bereich von 0,1 bis 30 cm liegt. Vielmehr umfasst die in Fig. 1 gezeigte Vorrichtung 18 drei Heizeinheiten, die sämtlich als Wärmestrahler, insbesondere Infrarotstrahler ausgeführt sind. Auch wenn der Einsatz von Wärmestrahlern bei der Verarbeitung von Kautschukmischungen 10 nach Einschätzung der Erfinder grundsätzlich vorteilhaft ist, ergeben sich in dem in Fig. 1 schematisch skizzierten Verfahren nicht die vorstehend beschriebenen Vorteile.

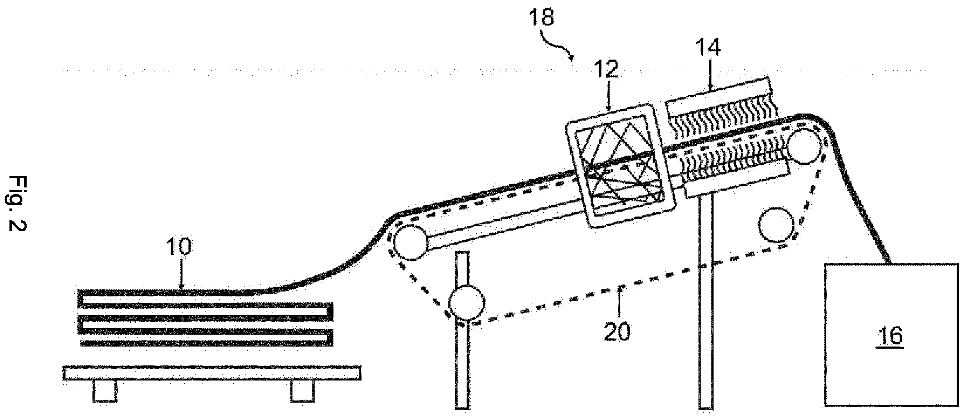

Fig. 2 zeigt im Gegensatz hierzu eine erfindungsgemäße Vorrichtung 18, mit welcher das erfindungsgemäße Verfahren durchgeführt werden kann. Der grundsätzliche Aufbau entspricht dabei dem der vorstehend für Fig. 1 beschrieben wurde, insbesondere hinsichtlich der Transportvorrichtung 20 und des Extruders 16. Im Unterschied zu dem in Fig. 1 gezeigten Aufbau umfasst die Vorrichtung 18 jedoch eine erste Heizeinheit 12, die einen Mikrowellenstrahler umfasst, welcher eine elektromagnetische Strahlung erzeugt, deren Intensitätsmaximum bei einer Wellenlänge von 12,25 cm liegt. Entsprechend erfolgt das Vorwärmen mittels Mikrowellenstrahlung, bevor die endgültige Zieltemperatur in der zweiten Heizeinheit 14 eingestellt wird, die im gezeigten Beispiel wiederum als Infrarotstrahler ausgeführt ist.

Sowohl das Vorwärmen in der ersten Heizeinheit 12 als auch das Erwärmen in der zweiten Heizeinheit 14 werden im Wesentlichen vollständig durch die jeweils eingesetzte elektromagnetische Strahlung bedingt. Die zweite Heizeinheit 14 ist dabei ein Wärmestrahler, dessen Intensitätsmaximum der Emission bei einer Wellenlänge von 1200 nm liegt. In dem in Fig. 2 gezeigten Beispiel werden die erste Heizeinheit 12 und die zweite Heizeinheit 14 jeweils mit einer Leistung von etwa 70 kW betrieben.

In der in Fig. 2. dargestellten Ausführungsform wird das erfindungsgemäße Verfahren für eine Kautschukmischung 10, die über einen besonders hohen Anteil an Naturkautschuk verfügt, dabei so betrieben, dass etwa 45 bis 50 % der insgesamt mittels des Heizprozesses erreichten Temperaturerhöhung auf den Schritt des Vorwärmens entfallen.

In Fig. 2 ist zu erkennen, dass die erste Heizeinheit 12 und die zweite Heizeinheit 14 relativ nah zueinander und wiederum vergleichsweise nah am Einlass des Extruders 16 angeordnet sind, wodurch nicht nur eine platzsparende räumliche Anordnung erreicht werden kann, sondern wodurch zudem Temperaturverluste außerhalb der Heizeinrichtungen minimiert werden.

Das in Fig. 2 gezeigte erfindungsgemäße Verfahren bestimmt die Temperatur der aufgewärmten Kautschukmischung vor Eintritt in den Extruder 16 mit einer am Einlass des Extruders 16 angeordneten Sensoreinheit (nicht gezeigt), bei der es sich um einen Infrarotsensor handelt. Das Vorwärmen in der ersten Heizeinheit 12 und das Erwärmen in der zweiten Heizeinheit 14 wird in Abhängigkeit von den Messdaten dieses Temperatursensors gesteuert, um Abweichungen der Ist-Temperatur von der Soll-Temperatur auszugleichen.

In dem in Fig. 2 gezeigten Beispiel beträgt die Temperaturdifferenz zwischen der Oberflächentemperatur der aufgewärmten Kautschukmischung und der Kerntemperatur, gemessen am Mittelpunkt des strangförmigen Materials mit einem kreisförmigen Querschnitt, etwa 5 °C. Die eingesetzte Kautschukmischung ist dabei eine vulkanisierbare Kautschukmischung, die neben dem Vulkanisationssystem auch 60 phr Ruß als Füllstoff umfasst, wodurch eine schwarze Kautschukmischung erhalten wird, die mittels Infrarotstrahlung besonders effizient aufgewärmt werden kann. Die Viskosität der aufgewärmten Kautschukmischung vor Eintritt in den Extruder 16 beträgt beispielsweise 70 MU (100 °C, ML 1+3).

In der gezeigten Ausführungsform wird das erfindungsgemäße Verfahren als kontinuierliches Verfahren betrieben, wobei das aus Kunststoff ausgebildete Transportband eine Bandgeschwindigkeit von etwa 15 m/min aufweist. Der Extruder 16 ist im gezeigten Beispiel als Schneckenextruder mit einer Extruderschnecke ausgeführt.

Aus der extrudierten Kautschukmischung, welche aus dem in Fig. 2 dargestellten erfindungsgemäßen Verfahren erhalten wird, können in üblicher Weise vulkanisierte Kautschukprodukte hergestellt werden, die vorteilhafterweise über ausgezeichnete Eigenschaften verfügen, da die Verarbeitung der Kautschukmischung im Extruder durch die optimale Fütterungstemperatur in besonders vorteilhafter Weise erfolgt.

### Bezugszeichenliste

- 10: Kautschukmischung
- 12: Erste Heizeinheit
- 14: Zweite Heizeinheit
- 16: Extruder
- 18: Vorrichtung
- 20: Transportvorrichtung

## Patentansprüche

1. Verfahren zum Verarbeiten von Kautschukmischungen (10), insbesondere bei der Herstellung von Fahrzeugreifen, umfassend die folgenden Verfahrensschritte:
a) Herstellen oder Bereitstellen einer Kautschukmischung (10),
b) Vorwärmen der Kautschukmischung (10) mit zumindest einer ersten Heizeinheit (12) zum Erhalt einer vorgewärmten Kautschukmischung (10),
c) Erwärmen der vorgewärmten Kautschukmischung (10) mit zumindest einer zweiten Heizeinheit (14) zum Erhalt einer aufgewärmten Kautschukmischung (10), und
d) Einbringen und Verarbeiten der aufgewärmten Kautschukmischung (10) in einem Extruder (16) zum Erhalt einer extrudierten Kautschukmischung (10),
wobei das Vorwärmen durch elektromagnetische Strahlung mit dem Intensitätsmaximum bei einer Wellenlänge im Bereich von 0,1 bis 30 cm erfolgt.

2. Verfahren nach Anspruch 1, wobei das Vorwärmen durch elektromagnetische Strahlung mit dem Intensitätsmaximum bei einer Wellenlänge im Bereich von 0,5 bis 25 cm, bevorzugt im Bereich von 2,5 bis 20 cm, besonders bevorzugt im Bereich von 7,5 bis 15 cm, erfolgt.

3. Verfahren nach einem der Ansprüche 1 oder 2, wobei das Erwärmen der vorgewärmten Kautschukmischung (10) mit zumindest einer zweiten Heizeinheit (14) erfolgt, die ausgewählt ist aus der Gruppe bestehend aus Vorwärmextrudern, temperierten Walzwerken und Wärmestrahlern, bevorzugt ausgewählt ist aus der Gruppe bestehend aus Wärmestrahlern, insbesondere Infrarotstrahlern.

4. Verfahren nach einem der Ansprüche 1 bis 3, wobei das Erwärmen der vorgewärmten Kautschukmischung (10) durch elektromagnetische Strahlung mit dem Intensitätsmaximum bei einer Wellenlänge im Bereich von 780 nm bis 50000 nm, bevorzugt im Bereich von 780 bis 3000 nm, besonders bevorzugt im Bereich von 780 bis 1400 nm, erfolgt.

5. Verfahren nach einem der Ansprüche 1 bis 4, wobei die Temperaturdifferenz zwischen der mittleren Temperatur der Kautschukmischung (10) in Verfahrensschritt a) und der vorgewärmten Kautschukmischung (10) im Bereich von 25 bis 65 %, bevorzugt im Bereich von 30 bis 60 %, besonders bevorzugt im Bereich von 35 bis 55 %, der Temperaturdifferenz zwischen der mittleren Temperatur der Kautschukmischung (10) in Verfahrensschritt a) und der aufgewärmten Kautschukmischung (10), beträgt.

6. Verfahren nach einem der Ansprüche 1 bis 5, wobei das Vorwärmen und das Erwärmen so ausgeführt werden, dass der Temperaturunterschied zwischen der Oberflächentemperatur der aufgewärmten Kautschukmischung (10) und der Kerntemperatur der aufgewärmten Kautschukmischung (10) weniger als 10 °C, bevorzugt weniger als 5 °C, besonders bevorzugt weniger als 2 °C, beträgt.

7. Verfahren nach einem der Ansprüche 1 bis 6, wobei die Temperatur der vorgewärmten Kautschukmischung (10) und/oder der aufgewärmten Kautschukmischung (10) mit zumindest einem Temperatursensor, bevorzugt mit einem Infrarotsensor, bestimmt wird, wobei das Vorwärmen und/oder das Erwärmen besonders bevorzugt mittels einer Steuereinheit in Abhängigkeit von den Messdaten des Temperatursensors gesteuert und/oder geregelt wird.

8. Verfahren zur Herstellung eines vulkanisierten Kautschukprodukts, umfassend die Schritte des Verfahrens zum Verarbeiten von Kautschukmischungen nach einem der Ansprüche 1 bis 7, zusätzlich umfassend die Verfahrensschritte:
e) Herstellen einer Kautschukkomponente, umfassend die extrudierte Kautschukmischung (10),
f) Herstellen eines Produktrohlings, umfassend die Kautschukkomponente, und
g) Vulkanisieren des Produktrohlings zum Erhalt des vulkanisierten Kautschukprodukts.

9. Vorrichtung (18) zum Verarbeiten von Kautschukmischungen (10), umfassend:
v1) zumindest eine erste Heizeinheit (12) zum Vorwärmen von Kautschukmischungen (10),
v2) zumindest eine zweite Heizeinheit (14) zum Erwärmen von vorgewärmten Kautschukmischungen (12),
v3) einen Extruder (16), und
v4) eine Transportvorrichtung (20) zum Transport einer Kautschukmischung (10) zum Extruder (16),
wobei die erste Heizeinheit (12) ausgewählt ist aus der Gruppe bestehend aus Mikrowellenstrahlern, deren Intensitätsmaximum der Emission bei einer Wellenlänge im Bereich von 0,1 bis 30 cm, liegt
wobei die zweite Heizeinheit (14) ausgewählt ist aus der Gruppe bestehend aus Vorwärmextrudern, temperierten Walzwerken und Wärmestrahlern, bevorzugt ausgewählt ist aus der Gruppe bestehend aus Wärmestrahlern, und
wobei die zweite Heizeinheit (14) bezogen auf die Transportvorrichtung (18) zwischen der ersten Heizeinheit (12) und dem Extruder (16) angeordnet ist.

10. Verwendung von elektromagnetischer Strahlung mit dem Intensitätsmaximum bei einer Wellenlänge im Bereich von 0,1 bis 30 cm beim Vorwärmen einer Kautschukmischung (10) vor dem Erwärmen der Kautschukmischung mit einer weiteren Heizeinheit zur Verringerung von Temperaturgradienten in der aufgewärmten Kautschukmischung (10) und zur Steigerung der Verarbeitungsgeschwindigkeit.

## Claims

1. Method for processing rubber mixtures (10), in particular in the production of vehicle tyres, comprising the following method steps:
a) producing or providing a rubber mixture (10),
b) pre-heating the rubber mixture (10) by means of at least one first heating unit (12) in order to obtain a pre-heated rubber mixture (10),
c) heating the pre-heated rubber mixture (10) by means of at least one second heating unit (14) in order to obtain a heated rubber mixture (10), and
d) introducing the heated rubber mixture (10) into, and processing the latter in, an extruder (16) in order to obtain an extruded rubber mixture (10),
wherein the pre-heating is effected by electromagnetic radiation with the intensity maximum at a wavelength in the range from 0.1 to 30 cm.

2. Method according to Claim 1, wherein the pre-heating is effected by electromagnetic radiation with the intensity maximum at a wavelength in the range from 0.5 to 25 cm, preferably in the range from 2.5 to 20 cm, particularly preferably in the range from 7.5 to 15 cm.

3. Method according to either of Claims 1 and 2, wherein the heating of the pre-heated rubber mixture (10) is effected by means of at least one second heating unit (14) which is selected from the group consisting of pre-heating extruders, temperature-controlled rolling mills and thermal radiators, preferably is selected from the group consisting of thermal radiators, in particular infrared radiators.

4. Method according to one of Claims 1 to 3, wherein the heating of the pre-heated rubber mixture (10) is effected by electromagnetic radiation with the intensity maximum at a wavelength in the range from 780 nm to 50 000 nm, preferably in the range from 780 to 3000 nm, particularly preferably in the range from 780 to 1400 nm.

5. Method according to one of Claims 1 to 4, wherein the temperature difference between the average temperature of the rubber mixture (10) in method step a) and the pre-heated rubber mixture (10) is in the range from 25 to 65%, preferably in the range from 30 to 60%, particularly preferably in the range from 35 to 55%, of the temperature difference between the average temperature of the rubber mixture (10) in method step a) and the heated rubber mixture (10).

6. Method according to one of Claims 1 to 5, wherein the pre-heating and the heating are carried out such that the temperature difference between the surface temperature of the heated rubber mixture (10) and the core temperature of the heated rubber mixture (10) is less than 10°C, preferably less than 5°C, particularly preferably less than 2°C.

7. Method according to one of Claims 1 to 6, wherein the temperature of the pre-heated rubber mixture (10) and/or of the heated rubber mixture (10) is determined by means of at least one temperature sensor, preferably by means of an infrared sensor, wherein the pre-heating and/or the heating are/is particularly preferably controlled in open-loop and/or closed-loop fashion by means of a control unit in dependence on the measurement data of the temperature sensor.

8. Method for producing a vulcanized rubber product, comprising the steps of the method for processing rubber mixtures according to one of Claims 1 to 7, additionally comprising the method steps:
e) producing a rubber component, comprising the extruded rubber mixture (10),
f) producing a product blank, comprising the rubber component, and
g) vulcanizing the product blank in order to obtain the vulcanized rubber product.

9. Apparatus (18) for processing rubber mixtures (10), comprising:
v1) at least one first heating unit (12) for pre-heating rubber mixtures (10),
v2) at least one second heating unit (14) for heating pre-heated rubber mixtures (12),
v3) an extruder (16), and
v4) a transport apparatus (20) for transporting a rubber mixture (10) to the extruder (16),
wherein the first heating unit (12) is selected from the group consisting of microwave radiators, the intensity maximum of the emission thereof lying at a wavelength in the range from 0.1 to 30 cm,
wherein the second heating unit (14) is selected from the group consisting of pre-heating extruders, temperature-controlled rolling mills and thermal radiators, preferably is selected from the group consisting of thermal radiators, and
wherein the second heating unit (14) is arranged between the first heating unit (12) and the extruder (16) in relation to the transport apparatus (18).

10. Use of electromagnetic radiation with the intensity maximum at a wavelength in the range from 0.1 to 30 cm when pre-heating a rubber mixture (10) prior to the heating of the rubber mixture by means of a further heating unit in order to lower temperature gradients in the heated rubber mixture (10) and in order to increase the processing speed.

## Revendications

1. Procédé permettant de traiter des mélanges de caoutchouc (10), en particulier lors de la fabrication de pneus de véhicule, comprenant les étapes de procédé suivantes consistant à :
a) fabriquer ou fournir un mélange de caoutchouc (10),
b) préchauffer le mélange de caoutchouc (10) par au moins une unité de chauffage (12) pour obtenir un mélange de caoutchouc préchauffé (10),
c) chauffer le mélange de caoutchouc préchauffé (10) par au moins une deuxième unité de chauffage (14) pour obtenir un mélange de caoutchouc réchauffé (10), et
d) introduire ou traiter le mélange de caoutchouc réchauffé (10) dans une extrudeuse (16) pour obtenir un mélange de caoutchouc extrudé (10),
dans lequel le préchauffage est effectué par un rayonnement électromagnétique avec un maximum d'intensité à une longueur d'onde dans la plage de 0,1 à 30 cm.

2. Procédé selon la revendication 1, dans lequel le préchauffage par le rayonnement électromagnétique avec le maximum d'intensité est effectué à une longueur d'onde dans la plage de 0,5 à 25 cm, de préférence dans la plage de 2,5 à 20 cm, de manière particulièrement préférée dans la plage de 7,5 à 15 cm.

3. Procédé selon l'une quelconque des revendications 1 ou 2, dans lequel le chauffage du mélange de caoutchouc préchauffé (10) est effectué par au moins une deuxième unité de chauffage (14) qui est sélectionnée dans le groupe composé des extrudeuses de préchauffage, des laminoirs tempérés et des radiateurs thermiques, en étant de préférence sélectionnée dans le groupe composé des radiateurs thermiques, en particulier des radiateurs infrarouges.

4. Procédé selon l'une quelconque des revendications 1 à 3, dans lequel le chauffage du mélange de caoutchouc préchauffé (10) par le rayonnement électromagnétique avec le maximum d'intensité est effectué à une longueur d'onde dans la plage de 780 à 50 000 cm, de préférence dans la plage de 780 à 3000 cm, de manière particulièrement préférée dans la plage de 780 à 1400 cm.

5. Procédé selon l'une quelconque des revendications 1 à 4, dans lequel la différence de température entre la température moyenne du mélange de caoutchouc (10) à l'étape de procédé a) et le mélange de caoutchouc préchauffé (10) se situe dans la plage de 25 à 65 %, de préférence dans la plage de 30 à 60 %, de manière particulièrement préférée dans la plage de 35 à 55 %, de la différence de température entre la température moyenne du mélange de caoutchouc (10) à l'étape de procédé a) et le mélange de caoutchouc réchauffé (10).

6. Procédé selon l'une quelconque des revendications 1 à 5, dans lequel le préchauffage et le chauffage sont effectués de telle sorte que la différence de température entre la température de surface du mélange de caoutchouc réchauffé (10) et la température à coeur du mélange de caoutchouc réchauffé (10) est inférieure à 10 °C, de préférence inférieure à 5 °C, de manière particulièrement préférée inférieure à 2 °C.

7. Procédé selon l'une quelconque des revendications 1 à 6, dans lequel la température du mélange de caoutchouc préchauffé (10) et/ou du mélange de caoutchouc réchauffé (10) est déterminée par au moins un capteur de température, de préférence par un capteur infrarouge, dans lequel le préchauffage et/ou le chauffage sont commandés et/ou régulés de préférence au moyen d'une unité de commande en fonction des données de mesure du capteur de température.

8. Procédé de fabrication d'un produit en caoutchouc vulcanisé, comprenant les étapes du procédé permettant de traiter des mélanges de caoutchouc selon l'une quelconque des revendications 1 à 7, comprenant en plus les étapes de procédé consistant à :
e) fabriquer un composant de caoutchouc comprenant le mélange de caoutchouc extrudé (10),
f) fabriquer une ébauche de produit comprenant le composant de caoutchouc, et
g) vulcaniser l'ébauche de produit pour obtenir le produit en caoutchouc vulcanisé.

9. Dispositif (18) permettant de traiter des mélanges de caoutchouc (10), comprenant :
v1) au moins une première unité de chauffage (12) pour préchauffer des mélanges de caoutchouc (10),
v2) au moins une deuxième unité de chauffage (14) pour réchauffer des mélanges de caoutchouc préchauffés (12),
v3) une extrudeuse (16), et
v4) un dispositif de transport (20) pour transporter un mélange de caoutchouc (10) jusqu'à l'extrudeuse (16),
dans lequel la première unité de chauffage (12) est sélectionnée dans le groupe composé des émetteurs de micro-ondes dont le maximum d'intensité de l'émission se situe à une longueur d'onde dans la plage de 0,1 bis 30 cm,
dans lequel la deuxième unité de chauffage (14) est sélectionnée dans le groupe composé des extrudeuses de préchauffage, des laminoirs tempérés et des radiateurs thermiques, en étant de préférence sélectionnée dans le groupe composé des radiateurs thermiques, et
dans lequel la deuxième unité de chauffage (14) est disposée par rapport au dispositif de transport (18) entre la première unité de chauffage (12) et l'extrudeuse (16).

10. Utilisation d'un rayonnement électromagnétique avec un maximum d'intensité à une longueur d'onde dans la plage de 0,1 à 30 cm lors du préchauffage d'un mélange de caoutchouc (10) avant le chauffage du mélange de caoutchouc par une unité de chauffage supplémentaire pour réduire des gradients thermiques dans le mélange de caoutchouc réchauffé (10) et pour augmenter la vitesse de traitement.
